# EUROPÄISCHE PATENTSCHRIFT

(11) **EP 3 162 354 B1**
(45) Veröffentlichungstag und Bekanntmachung des Hinweises auf die Patenterteilung: **23.01.2019**
(21) Anmeldenummer: 16195310.4
(22) Anmeldetag: 24.10.2016
(51) Int. Cl.: C04B 28/02, C04B 20/00, C04B 20/10, C09C 3/12, C09C 1/30, C08L 33/06

(54) **VERFAHREN ZUR HERSTELLUNG EINER FÜLLSTOFFMISCHUNG, UND FÜLLSTOFFMISCHUNG**
METHOD FOR PRODUCING A FILLER MIXTURE, AND FILLER MIXTURE
PROCÉDÉ DE FABRICATION D'UN MÉLANGE DE MATIÈRE DE CHARGE ET MÉLANGE DE MATIÈRE DE CHARGE

(30) Priorität: 23.10.2015 DE 102015220770
(43) Veröffentlichungstag der Anmeldung: 03.05.2017
(73) Patentinhaber: FR Bayern Technology GmbH, 94209 Regen (DE)
(72) Erfinder: Hock, Klaus, 94209 Regen (DE); Kazenas, Darius, 47297 Kaunas (LT)
(74) Vertreter: Isarpatent

(56) Entgegenhaltungen:
- EP-A1- 2 366 731
- EP-A2- 0 326 097
- EP-A2- 0 475 239
- US-A1- 2012 280 178

## Beschreibung

Die vorliegende Erfindung betrifft ein Verfahren zur Herstellung einer Füllstoffmischung umfassend silanisierte Füllstoffe, bei der die Viskosität minimiert und die Fließfähigkeit verbessert werden kann, sowie eine Füllstoffmischung mit diesen Eigenschaften, die durch das erfindungsgemäße Verfahren hergestellt werden kann.

### Stand der Technik

Mehrkomponenten-Füllstoffmischungen werden z.B. zum Herstellen von Formteilen im Haushaltbereich, beispielsweise bei Einrichtungsgegenständen für Küchen und Bäder wie Handwaschbecken, Küchenspülen, Badewannen, Duschtassen, Arbeitsplatten, Fußbodenbeläge, etc., verwendet. Üblicherweise werden sie mit reaktiven Polymerlösungen zu Dispersionen gemischt und diese nach der Formgebung ausgehärtet.

Gemäß dem Stand der Technik werden unterschiedliche Füllstoffe mit dem Gießharz nacheinander gemischt. Dies ist notwendig, da die eingesetzten Füllstoffmischungen aus unterschiedlichen Korndurchmessern bestehen und diese zur Entmischung und Sedimentation neigen. Zur Farbgebung wird entweder eine Trockenpigmentmischung oder eine im Bindemittel vordispergierte Farbdispersion der Pigmente dazugegeben. Dies erfordert ein intensives Homogenisieren, um Agglomerate zu zerkleinern, und/oder die Zugabe von Netzmitteln und/oder Dispergierhilfsmitteln, welche ein homogenes Verteilen erleichtern und ein Entmischen der Pigmente verhindern sollen.

Gewöhnlich werden Füllstoffe beschichtet, um die Benetzung mit den Bindemitteln zu erleichtern und die mechanischen Eigenschaften der hergestellten Produkte zu verbessern. Die Beschichtung findet hier üblicherweise in situ (im Bindemittel) oder direkt auf den Füllstoffen statt. Zur Beschichtung verwendet man üblicherweise Silane. Hierbei werden unterschiedliche Methoden angewendet. Bei Pulvern kommt beispielsweise eine Beschichtung während des Zerkleinerns zur Anwendung. Hier reagiert das Mineral durch die frisch gebrochene Kornoberfläche, welche eine erhöhte Reaktivität aufweist. Bei groben Partikeln (mehr als 200 µm) kann man Silan in einer Mischbeschichtung aufbringen; dies führt bei Füllstoffen, welche auf Grund Ihrer Herstellung eine alkalische Oberfläche besitzen, zu sehr guten Ergebnissen. Bei Füllstoffen mit einer neutralen oder leicht sauren Oberfläche reicht die Reaktivität des Silans jedoch normalerweise nicht aus, um ein zufriedenstellendes Ergebnis zu erhalten. Hier wird das Silan vor dem Aufbringen auf dem Füllstoff vorzugsweise unter Zugabe von Wasser und schwachen Säuren teilweise hydrolysiert. Hierbei reagiert das Wasser teilweise mit den vorhandenen Alkoxygruppen unter Bildung von reaktiven Hydroxylgruppen.

Die US 5,218,013 offenbart eine Verbindung aus einem Matrix bildenden Harz und einem Füllstoff zumindest hauptsächlich aus Quarzpartikeln, wobei die Mehrzahl der Quarzpartikel eine Größe zwischen 0,1 mm und 2 mm hat.

In der US 2005/0090597 A1 ist ein Aggregat offenbart, dass aus einer Acrylat-basierten Harzmatrix und anti-abrasiven Partikeln, hauptsächlich Quarzpartikeln mit einer Größe zwischen 0,1 mm und 1,2 mm, besteht, wobei zumindest 30 Prozent der anti-abrasiven Partikel gebrochene Partikel mit nicht regulärer Form sind.

Darüber hinaus ist der DE 10 2005 007 028 B4 die Verwendung eines farbigen Granulats zu entnehmen, wobei das Granulat aus Trägerkörnern besteht, die eine Oberflächenschicht umfassend Magnesium-Silikat, Wasser und Farbpigmente umfassen.

In der DE 103 35 427 B3 ist ein Verfahren zur Herstellung einer Farbsandzusammensetzung mit einer Vielzahl von Quarzsandkörnern mit außenseitigen Beschichtungen aus Farbpigmenten sowie eine Farbsandzusammensetzung beschrieben.

Der DE 10 2004 015 456 C5 kann ein Kunststoffformkörper mit Kunststoffgranulatkörnern entnommen werden, wobei die Kunststoffgranulatkörner aus mindestens einem Harzmaterial, ersten Füllstoffen und ersten Farbpigmenten zusammengesetzt sind.

In der EP 1 672 012 A1 ist ein Verfahren zur Herstellung von Verbundwerkstoffen durch Vermischen von kornartigen anorganischen und/oder organischen ersten Füllstoffkomponenten mit vorgegebenem ersten Korngrößenbereich und organischen und/oder anorganischen Bindemittelkomponenten offenbart, wobei ein Anteil der Bindemittelkomponenten durch mindestens eine feinkornartige zweite Füllstoffkomponente mit gegenüber den ersten Korngrößen kleineren zweiten Korngrößen vor, nach oder während dem Vermischen ersetzt wird und mit den ersten Füllstoffkomponenten zur Auffüllung von zwischen den Körnern der ersten Füllstoffkomponenten bestehenden Zwischenräumen vermengt wird.

Darüber hinaus sind silanisierte Pigmente aus beispielsweise der US 5,959,004, der EP 0 748 359 B1 und der US 2003/0027897 A1 bekannt.

Die EP 2 366 731 A1 beschreibt ein Verfahren, bei dem eine Zusammensetzung umfassend ein Harz, von 43 Gew.% bis 75 Gew.% von gebrochenen oder alluvialen Quarzpartikeln, welche eine Größe von 0,1 mm bis 2 mm haben, und von 3,25 Gew.% bis 42 Gew.% von elliptischen Partikeln, welche eine elliptische Form und eine Größe von weniger als 0,3 mm haben und aus Glas sind, polymerisiert wird.

Der US 2012/0280178 A1 ist ein Granulat zu entnehmen, dass aus einer gehärteten Mischung hergestellt ist, welches eine transparente Echtlicht-Matrix umfasst, in der zumindest ein photolumineszentes leuchtendes Pigment und ein transparentes Füllstoffmaterial vorhanden sind, wobei das Füllstoffmaterial eine Korngröße von weniger als 30 µm und/oder eine Korngröße zwischen 70 µm und 1,2 mmm umfasst.

In der EP 0 326 097 A2 ist ein Verfahren offenbart, bei dem zur Vorbereitung für die Verbindung mit Kunststoff auf eine Substratoberfläche durch Sandstrahlen mit einem Mittel, das aus 0,01 bis 90 Gew.% gegebenenfalls silanisiertem Material mit einer Korngröße < 5 µm und einer größeren Härte als die der Substratoberfläche und/oder 20 bis 100 Gew.% silanisiertem, siliciumhaltigem Material mit einer mittleren Korngröße von 2 bis 200 µm und zum Rest aus einem Sandstrahlmittel mit einer mittleren Korngröße von > 5 µm besteht, eine Schicht aufgebracht und diese gegebenenfalls anschließend silanisiert wird.

Es besteht bei den Füllstoffmischungen des Standes der Technik und insbesondere auch bei der Vermischung derselben mit Pigmenten bzw. Farbstoffen eine Schwierigkeit darin, diese einfach und ohne großen Aufwand zu vermischen und dafür zu sorgen, dass sich diese nicht wieder entmischen.

Es ist somit eine Aufgabe der vorliegenden Erfindung, eine Füllstoffmischung und ein Verfahren zur Herstellung derselben bereitzustellen, bei denen die Viskosität weiter verringert und die Fließfähigkeit erhöht werden kann. Weiter ist es eine Aufgabe der vorliegenden Erfindung, eine Füllstoffmischung bereitzustellen, die sich nicht wieder entmischt, insbesondere auch bei Zusatz von Farbstoffen, insbesondere Pigmenten.

### Zusammenfassung der Erfindung

Die Erfinder haben herausgefunden, dass sich durch eine spezielle Abfolge bei der Silanisierung von Füllstoffmischungen eine verbesserte Silanisierung der Fraktionen der Füllstoffe erzielen lässt, wodurch diese Fraktionen danach besser vermischt werden können. Weiterhin haben sie charakteristische Korngrößen für die Fraktionen gefunden, mit denen eine Entmischung der Füllstoffmischung verringert bzw. vermieden werden kann. Weiterhin haben sie herausgefunden, dass durch eine zusätzliche Silanisierung von Pigmenten, insbesondere im Verfahren der Herstellung der Füllstoffmischung, zudem diese Pigmente einfach in die Mischung eingebracht und vermischt werden können.

Untersuchungen von Füllstoffmischungen nach dem Stand der Technik haben zudem ergeben, dass der Einsatz von Partikeln mit einer Partikelgröße von mehr als 600 µm nicht mehr signifikant zu Verbesserung der Verschleißfestigkeit beiträgt. Vielmehr reduziert die Zugabe von groben Füllstoffen die mechanische Festigkeit (z.B. Schlagzähigkeit). Die Verwendung von feinen Füllstoffen oder Mehlen führt zur Erhöhung der Schlagfestigkeit, jedoch wird beim Einsatz von Mehlen die Oberflächenhärte und Abriebfestigkeit reduziert und die Kratzfestigkeit verringert. Untersuchungen haben ergeben, dass ab einer Korngröße von 200 µ die Kratzfestigkeit gegenüber den Mehlen signifikant verbessert wird. Verwendung von groben Partikeln erhöhen die Sedimentationsneigung der Dispersionen und die Dichte der Mischungen und damit letztendlich den Materialbedarf.

Stand der Technik ist es, unter Verwendung von zusätzlichen Mehlen die Packungsdichte zu erhöhen. Hierbei werden die Kornfraktionen einzeln silanisiert und separat in die Mischungen mit dem Harz eingemischt. Versuche, das Feinstmehl und die Hauptfraktion in einem Prozessschritt zu silanisieren, scheiterten und führten zu Agglomeraten. Überraschenderweise gelang eine sehr gute Beschichtung, wenn man die Grobanteile zuerst mit partiell vorhydrolysiertem Silan beschichtet und anschließend das Mehl zugibt und den Mischprozess fortsetzt, insbesondere mit nicht hydrolisiertem Silan.

Ein ähnliches Verhalten kann bei einem Einmischen von Pigmenten beobachtet werden. Werden diese zu Beginn des Mischprozesses dazugegeben, erhält man üblicherweise Agglomerate und einen schlechten Silanisierungsgrad. Wird diese Mischung in ein Gießharz eingearbeitet, kann man nach kurzer Standzeit beobachten, wie sich die Pigmente auf der Oberseite teilweise ansammeln. Hierdurch erhält man nicht die gewünschte Farbe. Werden die Pigmente nach der Silanisierung des Pigmentes dazugegeben, so stellten die Erfinder fest, dass man einen guten Silanisierungsgrad der gesamten Mischung erzielen kann. Die in das Gießharz eingemischte Mischung zeigt keine Pigmententmischung. Ebenso wurde festgestellt, dass deutlich geringere Menge an Pigmenten erforderlich sind, um die gleiche Farbe und die gleiche Sättigung zu erhalten.

Gemäß einem ersten Aspekt betrifft die vorliegende Erfindung ein Verfahren zur Herstellung einer Füllstoffmischung, umfassend
i) Bereitstellen einer ersten Fraktion von Füllstoffen mit einer Partikelgröße von 0,1 bis 0,8 mm;
ii) Silanisieren der ersten Fraktion von Füllstoffen durch Zugeben eines ersten Silanisierungsmittels und gegebenenfalls Wasser und Vermischen der erhaltenen Mischung;
iii) Zugeben einer zweite Fraktion von Füllstoffen mit einer Partikelgröße von mehr als 0 bis 0,08 mm zur ersten Fraktion und Vermischen der erhaltenen Mischung; und
iv) Silanisieren der zweiten Fraktion von Füllstoffen durch Zugeben eines zweiten Silanisierungsmittels und gegebenenfalls Wasser und Vermischen der erhaltenen Mischung.

In einem weiteren Aspekt betrifft die vorliegende Erfindung eine Füllstoffmischung, umfassend eine ersten Fraktion von silanisierten Füllstoffen mit einer Partikelgröße von 0,1 bis 0,8 mm; und eine zweite Fraktion von silanisierten Füllstoffen mit einer Partikelgröße von mehr als 0 bis 0,08 mm, welche durch das erfindungsgemäße Verfahren hergestellt ist.

Weitere Aspekte der vorliegenden Erfindung sind den abhängigen Ansprüchen und der detaillierten Beschreibung zu entnehmen.

### Detaillierte Beschreibung der Erfindung

### Definitionen

Als hydrophob wird im Rahmen der vorliegenden Erfindung wasserabweisend verstanden. Hydrophobe Oberflächen, Partikel, etc. sind erfindungsgemäß also solche, welche Wasser abweisen. Insbesondere sind hydrophobe Eigenschaften erfindungsgemäß mit Stoffen bzw. Molekülen mit unpolaren Gruppen assoziiert.

Als hydrophil wird im Gegensatz hierzu die Fähigkeit zur Wechselwirkung mit

Wasser und anderen polaren Stoffen verstanden.

In der Anmeldung beziehen sich Mengenangaben auf Gew.%, soweit es nicht anderweitig angegeben oder aus dem Zusammenhang ersichtlich ist.

Weiterhin wird die zweite Fraktion von Füllstoffen aufgrund ihrer kleineren Partikelgröße auch als Pulver oder Mehl bezeichnet, um sie einfach von der ersten Fraktion mit größeren Partikeln unterscheiden zu können.

Gemäß einem ersten Aspekt betrifft die vorliegende Erfindung ein Verfahren zur Herstellung einer Füllstoffmischung, umfassend
i) ein Bereitstellen einer ersten Fraktion von Füllstoffen mit einer Partikelgröße von 0,1 bis 0,8 mm;
ii) ein Silanisieren der ersten Fraktion von Füllstoffen durch Zugeben eines ersten Silanisierungsmittels und Vermischen der erhaltenen Mischung;
iii) ein Zugeben einer zweite Fraktion von Füllstoffen mit einer Partikelgröße von mehr als 0 bis 0,08 mm zur ersten Fraktion und Vermischen der erhaltenen Mischung; und
iv) ein Silanisieren der zweiten Fraktion von Füllstoffen durch Zugeben eines zweiten Silanisierungsmittels und Vermischen der erhaltenen Mischung.

Durch das vorstehende Verfahren kann eine Füllstoffmischung umfassend mindestens zwei verschiedenen Fraktionen erhalten werden, so dass eine Erniedrigung, insbesondere ein Minimum an Viskosität, und eine Erhöhung, insbesondere ein Maximum an Fließfähigkeit erreicht werden, wenn man die Füllstoffmischung in ein Bindemittel, beispielsweise ein organisches Bindemittel, einmischt.

Beispielsweise kann durch das erfindungsgemäße Verfahren eine Viskosität von weniger als 1350 mPas und eine Fließfähigkeit von mehr als 3 mPa bei Verwendung mit einem Bindemittel mit einer Viskosität von 450 Pas erzielt werden.

Weiterhin kann eine Füllstoffmischung erhalten werden, die - beispielsweise bei einem Transport - nicht zum Entmischen neigt.

Die Partikel der ersten Fraktion sind nicht besonders beschränkt, insofern sie das obige Partikelgrößenkriterium erfüllen und als Füllstoffe geeignet sind. Gemäß bestimmten Ausführungsformen können auch Mischungen von Füllstoffen in der ersten Fraktion vorgesehen sein, jedoch umfasst die erste Fraktion gemäß bestimmten Ausführungsformen nur eine Art an Füllstoffmaterial. Die Füllstoffe sind gemäß bestimmten Ausführungsformen silanisierbar, d.h. können durch Reaktion an der Oberfläche der Partikel silanisiert werden. Geeignete Füllstoffe sind bevorzugt mineralischen Ursprungs und umfassen beispielsweise Aluminate, Silikate, Oxyde, Hydroxyde, Karbonate oder Sulfate, beispielsweise Keramik, Glas, Borglas, Kalkstein, Quarz, Kreide, Talk, etc. Bevorzugt umfasst die erste Fraktion Quarzpartikel oder besteht die erste Fraktion aus Quarzpartikeln, die natürlichen oder synthetischen Ursprungs sein können, bevorzugt natürlichen Ursprungs.

Ebenso sind die Partikel der zweiten Fraktion nicht besonders beschränkt, so dass sie das obige Partikelgrößenkriterium erfüllen und als Füllstoffe geeignet sind. Gemäß bestimmten Ausführungsformen können wiederum auch Mischungen von Füllstoffen in der zweiten Fraktion vorgesehen sein, jedoch umfasst die zweite Fraktion gemäß bestimmten Ausführungsformen wiederum nur eine Art an Füllstoffmaterial. Auch die Füllstoffe der zweiten Fraktion sind gemäß bestimmten Ausführungsformen silanisierbar, d.h. können durch Reaktion an der Oberfläche der Partikel silanisiert werden. Auch hier können geeignete Füllstoffe solche umfassen, die für die erste Fraktion genannt sind und sind bevorzugt mineralischen Ursprungs. Bevorzugt umfasst die zweite Fraktion Quarzmehl oder besteht aus Quarzmehl.

Das Silanisieren der ersten und zweiten Fraktion ist jeweils nicht besonders beschränkt, so lange die obige Reihenfolge eingehalten wird, und kann beispielsweise unter Verwendung üblicher siliciumorganischer Verbindungen, welche hierin auch als Silane bezeichnet werden, durch übliche Standardverfahren erfolgen, beispielsweise durch Vermischen des Silans bzw. der siliziumorganischen Verbindung, des Füllstoffes und Wasser. Die Silane bzw. siliciumorganischen Verbindungen sind hierbei gemäß bestimmten Ausführungsformen hydrolysierbare Verbindungen, die durch Wasser in entsprechende Silanole umgewandelt werden können und dann mit der Oberfläche der Füllstoffpartikel reagieren können. Da die Morphologie, beispielsweise Oberfläche, der Füllstoffe unterschiedlich sein kann, können die Silanisierungsmittel (das erste, zweite und/oder dritte Silanisierungsmittel) gemäß bestimmten Ausführungsformen entsprechend den Füllstoffen geeignet gewählt werden, und es kann - beispielsweise je nach Lagestätte des Füllstoffs - eine Anpassung des Silanisierungsmittels vorgenommen werden, um optimale Eigenschaften zu erhalten. Als Silan für das erste Silanisierungsmittel und zweite Silanisierungsmittel, die gleich oder verschieden sein können, können beispielsweise die folgenden siliciumorganischen Verbindungen zum Einsatz kommen: Siliciumorganische Verbindungen der allgemeinen Formel RₙSiX₄₋ₙ (mit n = 0 bis 3, insbesondere 1 bis 3), wobei R eine nicht hydrolysierbare aliphatische, cycloaliphatische und/oder aromatische, substituierte oder nicht substituierte Gruppe mit 1 bis 20 Kohlenstoffatomen darstellt, wobei bei n > 1 auch R = H sein kann, insofern mindestens eine nicht hydrolysierbare aliphatische, cycloaliphatische und/oder aromatische Gruppe mit 1 bis 20 Kohlenstoffatomen in der siliciumorganischen Verbindung vorhanden ist, und X eine hydrolysierbare Gruppe darstellt, beispielsweise eine Alkoxy-, Halogen-, Acetoxy-, Amino- oder Hydroxygruppe, ggf. in Verbindung mit einer hydrolysierbaren aliphatischen, cycloaliphatischen und/oder aromatischen Gruppe mit 1 bis 20 Kohlenstoffatomen, etc. Die Gruppen R und X in einer Verbindung können hier, so mehr als eine davon vorkommt, gleich oder verschieden sein, und es können auch mehrere verschiedene siliciumorganische Verbindungen zum Einsatz kommen. Beispiele geeigneter Silane umfassen 3-Methoxysilylpropylmethacrylat (z.B. von Evonik), Geniosil 31, Methacryloxymethylmethyldimethoxysilan XL 32, Methacryloxymethyltrimethoxysilan XL 33 (Wacker), insbesondere in Verbindung mit Acrylaten und Polyestern als Bindemittel, 3-Aminopropyltriethoxysilan, Geniosil GF 93 (Wacker) in Verbindung mit Polyurethanen als Bindemittel, sowie 3 Glycidoxypropyltrimethoxysilan, Geniosil GF 80 (Wacker) in Verbindung mit Epoxidharzen als Bindemittel.

Darüber hinaus können in siliciumorganischen Verbindungen auch beispielsweise Dimere, Trimere, bzw. allgemein Polymere Verbindungen verstanden werden, die nach einer Hydrolyse der Verbindungen der allgemeinen Formel RₙSiX₄₋ₙ (mit n = 1 bis 3) entstehen können, beispielsweise als auch Polysiloxane, also makromolekulare siliciumorganische Verbindungen, die den Grundbaustein -Si(R)₂O- enthalten, wobei R wie oben definiert ist, wobei die Polysiloxane weiterhin auch noch hydrolysierbare Gruppen X bei beispielsweise einer unvollständigen Hydrolyse enthalten können.

Zudem sind die aus den genannten Verbindungen hergestellten Silanole - beispielsweise durch Hydrolyse - als erstes und/oder zweites und/oder drittes Silanisierungsmittel anwendbar. Die Silanole können hierbei beispielsweise teilweise oder vollständig hydrolysiert sein, es können also nur Teile der hydrolysierbaren Gruppen silanisiert sein oder alle Gruppen. Gemäß bestimmten Ausführungsformen sind die Silanole zumindest teilweise hydrolysiert, und gemäß bestimmten Ausführungsformen sind die Silanole vollständig hydrolysiert, wobei dies beispielsweise vom verwendeten Silan abhängen kann. Eine teilweise Hydrolysierung kann hierbei beispielsweise einen Umsetzung von 20% oder mehr hydrolysierbarer Gruppen, 30% oder mehr hydrolysierbarer Gruppen, 50% oder mehr hydrolysierbarer Gruppen, 60% oder mehr hydrolysierbarer Gruppen, 80% oder mehr hydrolysierbarer Gruppen oder 90% oder mehr hydrolysierbarer Gruppen umfassen, bezogen auf alle hydrolysierbaren Gruppen im Silan.

Es ist erfindungsgemäßen Verfahren nicht ausgeschlossen, dass das erste, zweite und/oder dritte Silanisierungsmittel Wasser enthält, beispielsweise als Spur, z.B. wenn es vor dem Vermischen mit dem Füllstoff und/oder Pigment hydrolysiert wird.

Die Silane bzw. siliciumorganischen Verbindungen können hierbei entsprechend eines später zu verwendenden Bindemittels, beispielsweise eines Polyesters, Epoxidharzes, Polyurethans und/oder Acrylats, und oder Mischungen davon, gewählt und in die Füllstoffmischung eingesetzt werden, so dass auch andere als die beispielhaft genannten Silane bzw. siliciumorganischen Verbindungen - je nach Bindemittel bzw. Anwendungszweck - verwendet werden können.

Das Silanisieren der ersten Fraktion von Füllstoffen durch Zugeben eines ersten Silanisierungsmittels und Vermischen der erhaltenen Mischung kann hierbei also derart erfolgen, dass eine siliciumorganische Verbindung und gegebenenfalls Wasser hinzugegeben werden, wobei die siliciumorganische Verbindung bevorzugt bereits als zumindest teilhydrolysierte, beispielsweise hydrolysierte, Verbindung vorliegt. Es kann beim Silanisieren der ersten Fraktion mindestens eine zumindest teilhydrolysierte, beispielsweise hydrolysierte, siliciumorganische Verbindung, beispielsweise auch in Wasser gelöst, zugegeben werden. Hierbei kann dann eine Dispersion entstehen.

Gemäß bestimmten Ausführungsformen ist das Silanisierungsmittel - zumindest teilweise, oder vollständig - vorhydrolysiert, so dass zumindest eine hydrolysierbare Gruppe hydroylsiert ist. Dadurch kann aus der Wasser/Silan Emulsion eine homogene Flüssigkeit hergestellt werden. Die beiden Phasen können, beispielsweise durch Rühren oder Homogenisieren (z.B. Ultraschall) zu einer nicht stabilen Emulsion überführt werden. Das Verschwinden der beiden Phasen wird generell von einer Wärmetönung begleitet. Die Menge an verwendetem Wasser kann hierbei geeignet eingestellt werden, und Wasser kann beispielsweise im Überschuss eingesetzt werden. Theoretisch benötigt man 3 mol Wasser für eine vollständige Hydrolyse bei drei hydrolysierbaren Gruppen im Silan (1 mol). Unter diesen Bedingungen erhält man jedoch gewöhnlich keine ausreichende Hydrolysezeit. Beispielsweise kann beim Hydrolysieren eine Mischung von Silan zu Wasser von 50:50 (Gewichtsprozent) verwendet werden. Zum Verbessern der Hydrolyse können auch Additive wie beispielsweise eine Säure, z.B. Essigessenz, zugegeben werden, beispielsweise mit weniger als 5 Gew,%, weniger als 1 Gew.%, weniger als 0,5 Gew.% oder weniger als 0,05 Gew.%, bezogen auf das Silanisierungsmittel

Bei Füllstoffen mit einer neutralen oder leicht sauren Oberfläche reicht die Reaktivität des Silans normalerweise nicht aus, um ein zufriedenstellendes Ergebnis zu erhalten, wie dies beispielsweise im vorliegenden Verfahren der Fall bei der ersten Fraktion sein kann. Hier wird das Silan bzw. die siliciumorganische Verbindung vorzugsweise unter Zugabe von Wasser und/oder schwachen Säuren teilweise hydrolysiert. Hierbei reagiert das Wasser zumindest teilweise oder auch vollständig mit den vorhandenen hydrolysierbaren Gruppen, z.B. Alkoxygruppen, unter Bildung von reaktiven Hydroxylgruppen.

Beim Silanisieren der zweiten Fraktion kann das Silanisieren ebenfalls durch Zugabe einer siliziumorganischen Verbindung erfolgen, wobei diese hydrolysiert sein kann oder nicht. Bevorzugt findet die Silanisierung der zweiten Fraktion jedoch mit einer nicht hydrolysierten Verbindung statt. Beim Silanisieren der zweiten Fraktion kann beim Hydrolysieren auch noch ggf. Wasser zugegeben werden, oder es kann noch Wasser aus der ersten Silanisierung vorhanden sein, wenn dieses als Überschuss zugegeben wurde. Es kann somit auch nach dem zweiten Silanisieren, und entsprechend auch nach einem dritten Silanisieren von Pigmentpartikeln, wieder eine Dispersion entstehen. Diese kann dann entsprechend getrocknet werden oder stehen gelassen werden, wodurch der Wasseranteil abnimmt, so dass eine feste Füllstoffmischung entsteht. In dieser können immer noch Spuren von Wasser, beispielsweise bis zu 5 Gew.%, bezogen auf die Füllstoffmischung, enthalten sein.

Die Dauer der Silanisierung ist nicht beschränkt, insofern eine Silanisierung sichergestellt ist. Gemäß bestimmten Ausführungsformen findet eine Silanisierung statt, insbesondere für jede Fraktion, bis die jeweiligen Partikel eine hydrophobe Oberfläche aufweisen, wobei die Hydrophobizität beispielsweise durch Aufbringen eines Wassertropfens auf die erste Fraktion bzw. Mischung bestimmt werden kann. Wenn dieser in die Fraktion (erste Fraktion) bzw. Mischung eindringt, ist noch keine ausreichende Hydrophobizität gegeben, und ein weiteres Silanisieren ist erforderlich, so dass man anhand einfacher Versuche eine geeignete Silanisierungszeit bestimmen kann. Diese kann beispielsweise von 0,5 h bis einer Woche betragen, beispielsweise 1 bis 3 Tage, z.B. 2 Tage, kann aber auch innerhalb von 0,5 bis 24 Stunden ablaufen.

Beim Silanisieren der Fraktionen kann gemäß bestimmten Ausführungsformen in der Füllstoffmischung eine Restfeuchte verbleiben, die weniger als 5 Gew.% beträgt, bezogen auf die Füllstoffmischung, bevorzugt weniger als 1 Gew.%, weiter bevorzugt weniger als 0,5 Gew.%, besonders bevorzugt weniger als 0,1 Gew.%, insbesondere bei der Lagerung, z.B., bei Raumtemperatur von 20°C. Ein typischer Wert der Feuchtigkeit bei Lagerung bei 20°C beträgt beispielsweise 0,05 - 0,08 Gew.%, bezogen auf die Füllstoffmischung.

Überraschenderweise gelang eine sehr gute Beschichtung, wenn man die Grobanteile, also die erste Fraktion, zuerst mit partiell vorhydrolysiertem oder vorhydrolysiertem Silan beschichtet, und anschließend das Mehl, also die zweite Fraktion, zugibt und den Mischprozess fortsetzt, insbesondere mit nicht hydrolisiertem Silan. Verwendet man ausschließlich hydrolysiertes Silan kann man einen schlechten Silanisierungsgrad und Agglomerate erhalten.

Gemäß bestimmten Ausführungsformen haben die Partikel der ersten Fraktion von Füllstoffen eine Partikelgröße von 0,1 bis 0,7 mm, bevorzugt, 01, bis 0,6 mm, weiter bevorzugt von 0,15 bis 0,6 mm, noch weiter bevorzugt von 0,15 bis 0,5 mm, wobei in der ersten Fraktion bevorzugt das Maximum der Partikelgrößenverteilung bei 0,2 mm oder mehr liegt. Durch ein Maximum der Partikelgrößenverteilung der ersten Fraktion von 0,2 mm oder mehr kann eine verbesserte Kratzfestigkeit beim Verarbeiten der Füllstoffmischung in einem Formteil erzielt werden. Deutlich verbessert ist in diesen Formulierungen auch die Oberflächenrauigkeit bei der weiteren Verarbeitung, was sich ganz besonders beim Verwenden von Acrylharzen als Bindemittel zum Herstellen der finalen Produkte sichtbar wird, welche einen höheren Schrumpf des Gießharzes aufweisen. Hierdurch lässt sich eine bessere Reinigungsfähigkeit ableiten.
Vergleicht man die Kratzfestigkeit mit einem Produkt in welchem Mehle (Korngröße <200µm, mittleres D50 = 20 µm) verwendet werden, so erhält man bei Verwendung der Mehle eine schlechte Kratzfestigkeit der Oberfläche.

Die Partikel der zweiten Fraktion haben gemäß bestimmten Ausführungsformen eine Partikelgröße mit einer durchschnittlichen Partikelgröße von mehr als 0 bis 0,08 mm. Gemäß bestimmten Ausführungsformen haben die Partikel der zweiten Fraktion von Füllstoffen eine durchschnittliche Partikelgröße d₅₀ von mehr als 0- 40µm, weiter bevorzugt von 0,05 bis 25 µm, weiter bevorzugt von 0,5 bis 20 µm,

Gemäß bestimmten Ausführungsformen haben alle Partikel der zweiten Fraktion eine Partikelgröße von mehr als 0 bis 0,08 mm. Gemäß bestimmten Ausführungsformen haben alle Partikel der zweiten Fraktion von Füllstoffen eine Partikelgröße von mehr 0,05 bis 70 µm, weiter bevorzugt von 0, bis 65 µm, wobei in der zweiten Fraktion bevorzugt das Maximum der Partikelgrößenverteilung in einem Bereich von 0 - 20 µm, bevorzugt 2 bis 17 µm, weiter bevorzugt 5 -15 µm liegt.

Durch eine geeignete Einstellung der Größen der beiden Partikelfraktionen kann gewährleistet werden, dass sich diese nicht Entmischen und unter vermindertem Aufwand eine gute Mischung erzielt wird. Die Füllstoffmischung weist durch das Mischen der beiden Fraktionen eine bimodale Verteilung auf, wobei eine oder beide Fraktionen gemäß bestimmten Ausführungsformen für sich gesehen keine Fullerverteilung bei der Partikelgrößenverteilung aufweisen.

Die Partikelgröße der ersten und zweiten Fraktionen kann hierbei auf gewöhnliche Weise, beispielsweise mittels Siebanalyse, mittels Laserbeugung, etc. geeignet bestimmt werden, wobei gemäß bestimmten Ausführungsformen sichergestellt wird, dass im Wesentliche alle, insbesondere alle, Partikel der jeweiligen Fraktion, insbesondere der ersten Fraktion, sich im angegebenen Partikelgrößenbereich befinden.

Für die erste Fraktion kann das beispielsweise durch Einstellen der Partikelgröße mittels Sieben mit Hilfe einer Siebanalyse gewährleistet werden, wobei hierzu die Siebe mit einem geeigneten Durchmesser der Maschenweite bestimmt werden können. Ein geeignetes Verfahren zur Siebanalyse kann beispielsweise der DIN-ISO 3310/1 entnommen werden, wobei beispielsweise Siebe der Firma Retsch zum Einsatz kommen können, beispielsweise mit einem Vibrationssieb der Firma Retsch mit folgenden Sieben mit den folgenden Maschenweiten: 800 µm, 400 µm, 315 µm, 200 µm, 160µm, 100µm. Bestimmt wird hierbei, z.B. gravimetrisch, der jeweilige Rückstand im Sieb bezogen auf die gesamte Einwaage.

Die Partikelgröße der zweiten Fraktion kann beispielsweise mittels Laserbeugung bestimmt werden, z.B. nach ISO 13320, beispielsweise mit dem Messgerät Cilas 1064 der Firma Quantachrome.

Gemäß bestimmten Ausführungsformen beträgt der Anteil der ersten Fraktion von Füllstoffen in der Füllstoffmischung nach dem zweiten Silanisieren 50 bis 95 Gew.%, bezogen auf 100 Gew.% der Füllstoffmischung, bevorzugt zwischen 60 und 90 Gew.%, wobei hier auch die Partikelgrößenverteilung, Partikelform, Silanisierungsgrad, etc. der ersten Fraktion einen Einfluss auf den Anteil dieser Fraktion in der Mischung haben kann. Durch eine entsprechende Einstellung der Verhältnisse der Fraktionen kann eine gute Stabilität gegen Entmischung bei Verbesserung der Viskositätseigenschaften beim Vermischen mit weiteren Bestandteilen wie Bindern zum Herstellen von weiteren Produkten erreicht werden.

Gemäß bestimmten Ausführungsformen haben die Partikel der ersten Fraktion von Füllstoffen eine im Wesentlichen runde oder kantengerundete Form. Gemäß bestimmten Ausführungsformen haben die Partikel der ersten Fraktion von Füllstoffen eine runde oder kantengerundete Form. Dies bedeutet, dass insbesondere keine Ecken an den Partikeln der ersten Fraktion vorhanden sind, und bevorzugt auch keine Kanten, wodurch das Vermischen mit der zweiten Fraktion weiter erleichtert wird und auch die Viskosität der Füllstoffmischung weiter herabgesetzt werden kann. Eine splittrige Kornform würde dichte Kugelpackungen beim Vermischen verhindern, einen erhöhten Bindemittel-, z.B. Harzverbrauch bei der Herstellung der finalen Produkte, und schlechte Fließeigenschaften mit sich bringen.

Die Partikel der zweiten Fraktion sind in ihrer Form nicht besonders beschränkt, liegen bevorzugt jedoch als gebrochene Partikel bzw. gebrochene Körner mit Ecken und/oder Kanten und somit einer vergrößerten Oberfläche vor. Dies kann die Kosten senken und für eine gute Reaktivität beim Silanisieren bewirken. Die Teilchen können also direkt nach einem Mahlprozess verwendet werden. Es ist jedoch nicht ausgeschlossen, dass kanten- und/oder eckenfreie Partikel, beispielsweise linsenförmige oder kugelige Partikel, in der zweiten Fraktion verwendet werden, wodurch bessere Fließeigenschaften erzielt werden können, jedoch ist dies mit höheren Kosten verbunden.

Gemäß bestimmten Ausführungsformen haben die Partikel der ersten Fraktion von Füllstoffen eine Mohshärte von größer als 6. Die Mohshärte kann hierbei geeignet auf übliche Weise, beispielsweise anhand von Ritzversuchen, bestimmt werden. Durch die hohe Mohshärte kann eine bessere Verschleißfestigkeit im finalen Produkt, welches unter Verwendung der Füllstoffmischung hergestellt wird, erzielt werden.

Gemäß bestimmten Ausführungsformen weisen mindestens 95 Gew.% der Partikel der ersten Fraktion von Füllstoffen und mehr, bevorzugt mindestens 97 Gew.% und mehr, weiter bevorzugt mindestens 99 Gew.%, besonders bevorzugt 100 Gew.%, bezogen auf die erste Fraktion von Füllstoffen, eine Partikelgröße von weniger als 0,5 mm auf. Bis zu einer Partikelgröße von 0,5 mm kann eine verbesserte Verschleißfestigkeit im finalen Produkt erzielt werden, danach jedoch nicht mehr, jedoch können die kleineren Partikel eine verbesserte Durchmischung und eine bessere Stabilität der Füllstoffmischung gegen Entmischen erzielt werden. Im Stand der Technik werden üblicherweise Kornfraktionen verwendet, die einen überwiegenden Teil der Partikel mit einer Korngröße größer 500 µm aufweisen. Diese Kornmischungen neigen zum Sedimentieren und Entmischen während eines Transports. Im Gegensatz hierzu neigt eine erfindungsgemäße Zusammensetzung, insbesondere mit der Beschränkung der Anteile an Partikeln mit einer Größe von mehr als 0,5mm, nicht zum Entmischen oder zum Absetzen unter den üblich angewendeten Verarbeitungsbedingungen. Grobe Korngrößen haben, wie angegeben, zudem den Vorteil einer erhöhten Kratzfestigkeit der Oberflächen in finalen Produkten.

Gemäß bestimmten Ausführungsformen weisen die Partikel der zweiten Fraktion von Füllstoffen eine Dichte von 2,0 - 3,0 g/cm³, bevorzugt 2,2 - 2,7 g/cm³ auf. Bei Verwendung von Füllstoffen der zweiten Fraktion mit einer zu hohen Dichte kann es sein, dass eine geringere Stabilität der Füllstoffmischung erhalten wird.

Die Partikel der ersten Fraktion können zudem ebenfalls eine Dichte in diesem Bereich, also von 2,0 - 3,0 g/cm³, bevorzugt 2,2 - 2,7 g/cm³ aufweisen.

Gemäß bestimmten Ausführungsformen umfasst das erfindungsgemäße Verfahren weiter die folgenden Schritte, welche sich an die oben genannten anschließen:
v-a) Zugeben einer Fraktion von Pigmenten; und
vi-a) Silanisieren der Fraktion von Pigmenten durch Zugeben eines dritten Silanisierungsmittels; oder
v-b) Zugeben einer Fraktion von silanisierten Pigmenten.

Hierbei dienen die Pigmente als ein weiterer Feststoff zur Farbgebung. Bevorzugt werden hierbei anorganische Pigmente eingesetzt, die nicht besonders beschränkt sind, beispielsweise Eisenoxid, z.B. Fe₂O₃ oder Fe₃O₄, oder Titanoxid TiO₂, sowie Mischphasenoxidpigmente wie Nickelantimontitanat, Chromantimontitanat, Bismutvanadat, Cobaltaluminat, Spinellschwarz, Cobalttitanat, Kupferchromit, Cobaltchromspinell, Eisenchromspinell; Bariumsulfat, Iriodin®, etc. Es können einzelne Arten von Pigmenten oder Mischungen von Pigmenten zugegeben werden. Die Pigmentpartikel sind in ihrer Größe nicht besonders beschränkt und können beispielsweise eine Partikelgröße von 0,005 bis 10 µm, beispielsweise 0,005 bis 1 µm aufweisen. Der Anteil an silanisierten Pigmenten in der Füllstoffmischung kann gemäß bestimmten Ausführungsformen 0,1 bis 20 Gew.% betragen, bevorzugt 0,3 bis 10 Gew.%, basierend auf der Füllstoffmischung, abhängig vom verwendeten Pigment und/oder dem jeweiligen Farbton.

Typische Einsatzmengen sind zum Beispiel 0,5 Gew.% bei schwarzen Pigmenten (z.B. Fe₃O₄ (Mischkristall aus Fe₂O₃ und FeO) und 3,30 Gew.% bei weißen Pigmenten (z.B. TiO₂) dieser Partikelgröße, bezogen auf die Füllstoffmischung.

Um ein Entmischen der Pigmente zu vermeiden, wird üblicherweise ein Benetzungsadditiv mit 3,5 - 4 Gew.% eingesetzt. Bei der Verwendung von silanisierten Pigmenten kann dieses eingespart werden. Falls unsilanisierte Pigmente zur Füllstoffmischung zugegeben werden und diese nicht silanisiert werden, kann ein Benetzungsadditiv mit 2 bis 7 Gew.%, bevorzugt 3 bis 6 Gew.%, weiter bevorzugt 3,5 - 4 Gew.% eingesetzt werden, bezogen auf die Füllstoffmischung.

Das Silanisieren ist hierbei nicht besonders beschränkt, und das dritte Silanisierungsmittel kann beispielsweise unter denen ausgewählt werden, welche beispielhaft für das erste Silanisierungsmittel genannt sind. Auch kann das dritte Silanisierungsmittel dem ersten und/oder zweiten entsprechen oder sich von diesen unterscheiden.

Gemäß bestimmten Ausführungsformen werden die Pigmente vor dem Einsatz, also der Zugabe, mechanisch aufgeschlossen - d.h. Agglomerate werden zerkleinert, so dass eine maximale Wirkung erreicht wird. Maximale Wirkung heißt hierbei maximale Farbgebung bei minimalem Einsatz. Farbunterschiede können somit verringert bzw. sogar vermieden werden. Auch können Fehlstellen im finalen Produkt vermieden werden.

Vorzugsweise werden bei Pigmentmischungen die Pigmente nicht einzeln dazugegeben sondern als Pigmentpräparation bzw. Pigmentmischung, die der Farbe entspricht, die im finalen Produkt erwünscht ist.

Durch die silanisierten Pigmente ergeben sich zudem die Vorteile, dass Farbentmischungen und Pigmentseparationen nicht auftreten, dass eine Farbvertiefung auftritt und damit weniger Pigmente benötigt werden im Vergleich zu herkömmlichen Füllstoffmischungen. Die Einsparung ist hierbei beispielsweise von der Farbe abhängig, und man kann 10 - 40 % der üblichen Pigmentmenge einsparen. Die Pigmente müssen zudem nicht als flüssige Pasten zudosiert werden, was eine beträchtliche Vereinfachung beim Herstellungsprozess darstellt.

Gemäß eines weiteren Aspekts betrifft die vorliegende Erfindung eine Füllstoffmischung, umfassend eine ersten Fraktion von silanisierten Füllstoffen mit einer Partikelgröße von 0,1 bis 0,8 mm; und eine zweite Fraktion von silanisierten Füllstoffen mit einer Partikelgröße von mehr als 0 bis 0,08 mm, welche durch das erfindungsgemäße Verfahren hergestellt ist.

Die Füllstoffe können hierbei die Eigenschaften aufweisen, wie sie für das vorstehend angegebene Verfahren angegeben sind und weisen insbesondere in bestimmten Ausführungsformen solche Eigenschaften auf, wie sie für das vorstehend angegebene Verfahren angegeben sind. Die erfindungsgemäße Füllstoffmischung kann insbesondere durch das vorliegende Verfahren hergestellt werden.

Gemäß bestimmten Ausführungsformen beträgt der Anteil der ersten Fraktion von Füllstoffen in der Füllstoffmischung, wie nach dem zweiten Silanisieren im Verfahren erhalten - also der silanisierten Fraktion, 50 bis 95 Gew.%, bezogen auf 100 Gew.% der Füllstoffmischung.

Gemäß bestimmten Ausführungsformen haben die Partikel der ersten Fraktion von Füllstoffen in der erfindungsgemäßen Füllstoffmischung eine im Wesentlichen runde oder kantengerundete Form. Gemäß bestimmten Ausführungsformen haben die Partikel der ersten Fraktion von Füllstoffen eine runde oder kantengerundete Form. Weiterhin können die Partikel der ersten Fraktion von Füllstoffen gemäß bestimmten Ausführungsformen eine Mohshärte von größer als 6 haben. Zudem können gemäß bestimmten Ausführungsformen mindestens 95 Gew.% der Partikel der ersten Fraktion von Füllstoffen, bezogen auf die erste Fraktion von Füllstoffen, eine Partikelgröße von weniger als 0,5 mm aufweisen.

Darüber hinaus können die Partikel der zweiten Fraktion von Füllstoffen gemäß bestimmten Ausführungsformen eine Dichte von 2,0 - 3,0 g/cm³, bevorzugt 2,2 - 2,7 g/cm³, aufweisen.

Zudem kann die erfindungsgemäße Füllstoffmischung weiter eine Fraktion von silanisierten Pigmenten umfassen.

Hierbei dienen die Pigmente als ein weiterer Feststoff zur Farbgebung. Bevorzugt werden hierbei anorganische Pigmente eingesetzt, die nicht besonders beschränkt sind, beispielsweise Eisenoxid, z.B. Fe₂O₃ oder Fe₃O₄, oder Titanoxid TiO₂, sowie Mischphasenoxidpigmente wie Nickelantimontitanat, Chromantimontitanat, Bismutvanadat, Cobaltaluminat, Spinellschwarz, Cobalttitanat, Kupferchromit, Cobaltchromspinell, Eisenchromspinell; Bariumsulfat, Iriodin®, etc. Es können einzelne Arten von Pigmenten oder Mischungen von Pigmenten zugegeben werden. Die Pigmentpartikel sind in ihrer Größe nicht besonders beschränkt und können beispielsweise eine Partikelgröße von 0,005 bis 10 µm, beispielsweise 0,005 bis 1 µm aufweisen. Der Anteil an silanisierten Pigmenten in der Füllstoffmischung kann gemäß bestimmten Ausführungsformen 0,1 bis 20 Gew.% betragen, bevorzugt 0,3 bis 10 Gew.%, basierend auf der Füllstoffmischung, abhängig vom verwendeten Pigment und/oder dem jeweiligen Farbton.

Typische Einsatzmengen sind zum Beispiel 0,5 Gew.% bei schwarzen Pigmenten (z.B. Fe₃O₄ (Mischkristall aus Fe₂O₃ und FeO) und 3,30 Gew.% bei weißen Pigmenten (z.B. TiO₂) dieser Partikelgröße, bezogen auf die Füllstoffmischung.

Falls unsilanisierte Pigmente zur Füllstoffmischung zugegeben werden und diese nicht silanisiert werden, kann ein Benetzungsadditiv mit 2 bis 7 Gew.%, bevorzugt 3 bis 6 Gew.%, weiter bevorzugt 3,5 - 4 Gew.% eingesetzt werden, bezogen auf die Füllstoffmischung, um ein Entmischen der Pigmente zu vermeiden.

Es ist darüber hinaus gemäß bestimmten Ausführungsformen nicht ausgeschlossen, dass die Füllstoffmischung Wasser umfasst, welches, beispielsweise in Spuren von weniger als 5 Gew.%, bezogen auf die Füllstoffmischung, durch das Silanisieren der ersten und/oder zweiten Fraktion und/oder der Pigmente eingebracht werden kann. Beispielsweise kann in der ersten und/oder zweiten Fraktion von Füllstoffen noch eine Spur an Wasser vorhanden sein. Beim Silanisieren der Fraktionen kann gemäß bestimmten Ausführungsformen in der Füllstoffmischung eine Restfeuchte verbleiben, die weniger als 5 Gew.% beträgt, bezogen auf die Füllstoffmischung, bevorzugt weniger als 1 Gew.%, weiter bevorzugt weniger als 0,5 Gew.%, besonders bevorzugt weniger als 0,1 Gew.%, insbesondere bei der Lagerung, z.B., bei Raumtemperatur von 20°C. Ein typischer Wert der Feuchtigkeit bei Lagerung bei 20°C beträgt beispielsweise 0,05 - 0,08 Gew.%, bezogen auf die Füllstoffmischung.

Die erfindungsgemäßen Füllstoffmischungen können zum Herstellen von Formteilen, beispielsweise im Haushaltbereich, z.B. bei Einrichtungsgegenständen für Küchen und Bäder wie Handwaschbecken, Küchenspülen, Badewannen, Duschtassen, Arbeitsplatten, Fußbodenbeläge, etc., verwendet werden. Hierbei können zu der Füllstoffmischung Bindemittel hinzugegeben werden und die erhaltene Mischung dann weiter verarbeitet werden. Durch die erfindungsgemäße Füllstoffmischung kann hierbei eine Verringerung der Viskosität einer so hergestellten Mischung mit Bindemitteln erzielt werden, was die Verarbeitbarkeit vereinfacht und die Vermischung erleichtert und somit entsprechenden Aufwand spart, und/oder der Füllstoffanteil in der Mischung mit dem Bindemittel - und somit im finalen Produkt - kann erhöht werden, wodurch Kosten gespart werden können. Dies trifft insbesondere auch zu wenn die erfindungsgemäße Füllstoffmischung weiter silanisierte Pigmente umfasst, da insbesondere ein Einmischen von Pigmenten bzw. Farbpasten in bestehende Füllstoffmischungen mit einem hohen Aufwand verbunden ist. Zudem kann eine verbesserte Farbwirkung mit den eingemischten silanisierten Pigmenten selbst unter Verwendung einer verringerten Menge an Pigmenten erzielt werden, so dass hier auch Kosten gespart werden können.

Die Erfindung wird im Anschluss anhand einiger beispielhafter Ausführungsformen dargestellt, die diese jedoch nicht einschränken.

### Beispiele

Sämtliche Experimente wie auch die Vergleichsbeispiele und Beispiele wurden bei Raumtemperatur von ca. 20°C - 25°C durchgeführt, soweit nicht anderweitig angegeben.

Auch wurde der Druck bei den Vergleichsbeispielen und Beispielen ebenfalls nicht variiert, sondern bei Raumdruck (ca. 1,013 bar) belassen.

Die weiteren detaillierten Daten sind bei den jeweiligen Vergleichsbeispielen bzw. Beispielen angegeben.

### Beispiel 1

Es wurde ein Quarzsand mit folgender Partikelgrößenverteilung als erste Füllstofffraktion verwendet. Die in Tabelle 1 (wie auch Tabelle 3 bzw. entsprechenden Tabellen für eine Siebanalyse) dargestellte Partikelgröße für eine Zeile stellt hierbei immer die Untergrenze dar, wobei die Obergrenze die darüber liegende Zeile darstellt bzw. bei der obersten Zeile die Partikelgröße darüber liegt.

**Tabelle 1: Partikelgrößenverteilung des in Beispiel 1 verwendeten Quarzsandes (erste Fraktion)**

| Partikelgröße | Anteil [Gew.%], bezogen auf alle Partikel in der ersten Fraktion |
|---|---|
| 800 µm | 0,0 |
| 400 µm | 25 |
| 315 µm | 42 |
| 200 µm | 27 |
| 160 µm | 4 |
| 100 µm | 2 |

Das Material ist sehr hell und eignet sich dadurch besonders auch für die Herstellung von hellen und weißen Formteilen oder Belägen. Die Partikelgrößenbestimmung erfolgte hierbei mit einem Vibrationssieb der Firma Retsch gemäß DIN-ISO 3310-1. Hierbei kommen Siebe mit den folgenden Maschenweiten zum Einsatz: 800µm, 400 µm, 315 µm, 200 µm, 160µm 100µm. Bestimmt wurde der jeweilige Rückstand im Sieb bezogen auf die gesamte Einwaage an Quarzsand. Die grobe Kornfraktion besteht aus natürlich verwittertem Ursprungsgestein, wodurch gerundete Kornformen entstehen, die sich für die Herstellung von Gießmassen besonders gut eignen. Die Korngröße der Grobfraktion liegt zwischen 0,1 mm und 0,6 mm, wobei 95 % der Partikel eine Korngröße kleiner 500 µm besitzen.

Die erste Fraktion wurde anschließend silanisiert. Hierbei wird ein teilhydrolysiertes Silan der Mischung zugesetzt, wobei zum Silanisieren ein Silanisierungsmittel verwendet wird, das wie folgt erhalten wird:
Eine Mischung von Silan (3-Methoxysilylpropylmethacrylat (Evonik, DE), 0,15 Gew.% bezogen auf den Füllstoff der ersten Fraktion) zu Wasser von 50:50 (Gewichtsprozent) wird hergestellt. Dazu gegeben werden 0,002 Gew.% Essigessenz. Durch das Rühren entsteht eine instabile Emulsion, das heißt wenn der Rührer ausgeschaltet wird separieren sich die beiden Phasen wieder. Gegen Ende der Reaktionszeit verschwinden die "Tröpfchen" zusehends, und es entsteht eine durchsichtige glasklare Lösung. Diese wird eingesetzt. Die Lösung wird immer frisch bereitet und unter Mischen in die Füllstoffe eingedüst.

Nach einer festgelegten Mischzeit wurde Quarzmehl als pulverförmiger Füllstoff als zweite Fraktion hinzugegeben. Die Teilchengröße der zweiten Fraktion wurde mittels Laserbeugung nach ISO 13320 mit dem Messgerät Cilas 1064 der Firma Quantachrome bestimmt. Die Partikelgrößenverteilung des Quarzmehls war wie in Tabelle 2 gezeigt. Die in Tabelle 2 (wie auch Tabelle 4 bzw. entsprechenden Tabellen für eine Analyse mittels Laserbeugung) dargestellte Partikelgröße für eine Zeile stellt hierbei den Anteil an Partikel an der Gesamtheit der Partikel der zweiten Fraktion dar, die mindestens eine entsprechende Teilchengröße haben, in Vol.%, wobei die Obergrenze für die Partikelgröße, jedoch für die Quarzmehle unter 80 µm liegt. Derd10 betrug 2,1 µm, der d50 15,8 µm und der d90 41,1 µm.

**Tabelle 2: Partikelgrößenverteilung des in Beispiel 1 verwendeten Quarzmehls (zweite Fraktion)**

| Partikelgröße | Anteil [Vol.%], bezogen auf alle Partikel in der zweiten Fraktion |
|---|---|
| 64 µm | 0,3% |
| 48 µm | 4,9 |
| 32 µm | 32,3 |
| 24 µm | 34,5 |
| 16 µm | 49,5 |
| 12 µm | 58,3 |
| 8 µm | 68 |
| 6 µm | 73,3 |
| 4 µm | 80,3 |
| 2 µm | 90,5 |
| 1 µm | 96,1 |

Zum Vermischen der Füllstoffe kann jeglicher Mischer wie beispielsweise ein einfacher Betonmischer verwendet werden.

Danach wurde wiederum silanisiert. Es stellte sich in Vorversuchen heraus, dass eine Verwendung von hydrolysierten Silan nicht zum Erfolg führt. Folglich wurde unhydrolisiertes Silan (3-Methoxysilylpropylmethacrylat (Evonik, DE), 0,30 Gew.% bezogen auf den Füllstoff der zweiten Fraktion) eingesetzt, um eine ausreichende Hydrophobie zu erhalten. Die Hydrophobie wurde geprüft, indem man einen Wassertropfen auf die Mischung aufbringt. Bei guter Beschichtung dringt das Wasser nicht in das Gemenge ein, sondern bleibt auf dem Füllstoffgemisch als Tropfen stehen.

### Der Mengenanteil erste Fraktion zu zweite Fraktion betrug hierbei 70 Gew.% zu 30 Gew.%

Üblicherweise wird die Viskosität bei einer Geschwindigkeit mit einem Brookfield Messgerät gemessen. Hierbei werden die Verhältnisse jedoch nur unzureichend wiedergegeben. Bei der Zusammenstellung der erfindungsgemäßen Mischungen wurde deshalb mit einem Viskosimeter der Firma Schleibinger unter Verwendung eines sogenannten Mörtelpaddels die Rührgeschwindigkeit gleichmäßig von 0 auf 80 Umdrehungen/min in 10 Minuten erhöht. Die Messordnung wurde so gewählt, dass während der Messung ein Entmischen der Dispersion vermieden wird. Es wurden Wertepaare aus Drehmoment und Geschwindigkeit ermittelt. Die Ableitung dieser Messkurve ergibt die relative Viskosität der Mischung. Aus dem Achsenabschnitt kann man die relative Fließgrenze entnehmen (entsprechend "Use of the ViscoCorder to study the rheology of fresh mortar", P. F. G. Banfill, Magazine of Concrete Research, 1990, 42, No. 153, Dec., 213-221).

Es ergab sich eine Viskosität von 897 mPas und eine Fließgrenze von 3,84 Pa.

In Beispiel 1 wurde eine Wassermenge von 0,19 Gew.% beim Silanisieren eingesetzt. Durch die Reaktion mit dem Silan werden davon Anteile verbraucht, und es ergab sich eine Restfeuchte von 0,16 Gew.% nach dem Mischen. Nach einer Standzeit von 48 Stunden pegelte sich die Feuchte auf einen typischen Wert von 0,05 - 0,08 Gew.% ein.

### Beispiel 2

Beispiel 2 wurde analog Beispiel 1 durchgeführt, wobei anstelle des Quarzpulvers entsprechend des ersten Beispiels ein zweites Quarzpulver mit transluzentem Erscheinungsbild (wohl aufgrund anderer mineralogischer Zusammensetzung) mit der folgenden Partikelgrößenverteilung in Tabelle 3 verwendet wurde.

**Tabelle 3: Partikelgrößenverteilung des in Beispiel 2 verwendeten Quarzsandes (erste Fraktion)**

| Partikelgröße | Anteil [Gew.%], bezogen auf alle Partikel in der ersten Fraktion |
|---|---|
| 800 µm | 0,0 |
| 400 µm | 9,3 |
| 315 µm | 17,6 |
| 200 µm | 43,5 |
| 160 µm | 17,4 |
| 100 µm | 12,2 |

Die grobe Kornfraktion besteht wiederum aus natürlich verwittertem Ursprungsgestein, wodurch gerundete Kornformen entstehen, die sich für die Herstellung von Gießmassen besonders gut eignen. Die Korngröße der Grobfraktion liegt zwischen 0,1 mm und 0,6 mm, wobei 95 % der Partikel eine Korngröße kleiner 500 µm besitzen.

Weiterhin wurde anstelle des Quarzmehls des ersten Beispiels ein Quarzmehl mit der in Tabelle 4 dargestellten Partikelgrößenverteilung verwendet (in Vol.%). Der d10 betrug 1,3 µm, der d50 9,9 µm und der d90 28,2 µm.

**Tabelle 4: Partikelgrößenverteilung des in Beispiel 2 verwendeten Quarzmehls (zweite Fraktion)**

| Partikelgröße | Anteil [Vol.%], bezogen auf alle Partikel in der zweiten Fraktion |
|---|---|
| 64 µm | 0,1 |
| 48 µm | 1,4 |
| 32 µm | 7,2 |
| 24 µm | 14,5 |
| 16 µm | 30,7 |
| 12 µm | 43,2 |
| 8 µm | 55,8 |
| 6 µm | 62 |
| 4 µm | 70,8 |
| 2 µm | 84 |
| 1 µm | 93,4 |

Darüber hinaus wurde zum Silanisieren der zweiten Fraktion hydrolysiertes Silan (3-Methoxysilylpropylmethacrylat (Evonik, DE), 0,30 Gew.% bezogen auf den Füllstoff der zweiten Fraktion) verwendet.

### Der Mengenanteil erste Fraktion zu zweite Fraktion betrug hierbei 85 Gew.% zu 15 Gew.%

Es ergab sich eine Viskosität von 958 mPas und eine Fließgrenze von 3,96 Pa.

### Beispiel 3

Ein besonderer Wunsch ist, dass beim Verarbeiten auch Farbpigmente zur Farbgebung verwendet werden. Diese werden üblicherweise in Form von Farbpasten in den verwendeten Bindemitteln zugesetzt und dispergiert. Die Dispersionen werden dann den Füllstoffbindemittelmischungen zugesetzt oder als trockenen Pigmentmischungen eindispergiert. Hier kommt es jedoch oft zu schlechten Benetzungseigenschaften von einzelnen Pigmenten die ein Entmischen der Pigmente ergeben. Hier muss man mit Benetzungsadditiven entgegenwirken.

Insofern ist es erstrebenswert, die Pigmente schon in einer Füllstoffmischung zu haben, welche dann mit einem Bindemittel vermischt werden kann. Überraschenderweise gelingt dies, wenn man Pigmente kurz vor dem Mischende (z.B. 10 Minuten) zusetzt und mit der Füllstoffmischung silanisiert. Beispielsweise kann Eisenoxid Fe₂O₃ oder Fe₃O₄ zugegeben werden, oder Titandioxid, und dann silanisiert werden, oder silanisiertes Eisenoxid oder Titandioxid zugegeben werden, wobei der Anteil davon je nach gewünschtem Farbton variiert werden kann. Typische Einsatzmengen sind zum Beispiel 0,5 Gew.% bei schwarzen Pigmenten (z.B. Fe₃O₄ (Mischkristall aus Fe₂O₃ und FeO) mit einer Partikelgröße von 0,005 bis 1 µm und 3,30 Gew.% bei weißen Pigmenten (z.B. TiO₂) dieser Partikelgröße, bezogen auf die Füllstoffmischung. Dies bedeutet, dass im Falle schwarzer Partikel nur ein Mehlanteil von 29,5 Gew.% anstelle von 30 Gew.% und bei weißen Partikeln ein Mehlanteil von 26,7 Gew.% bei Beispiel 1 eingesetzt wird.

Für das Beispiel der schwarzen Pigmente ergeben sich also folgende Gewichtsanteile (Gew.%): Sand 70, Mehl 29,5, schwarzes Pigment 0,5.
Im Falle weißer Partikel ist dies: Sand 70, Mehl 26,7, weißes Pigment 3,3.

Wenn man die schwarzen Pigmente direkt in die Mischung unsilanisiert einarbeitet, werden anstelle der 0,5 % 0,85 % Pigment benötigt, und wenn man hier stattdessen eine Paste einsetzt, werden 0,87 % Pigment benötigt.

Um ein Entmischen der unsilanisierten Pigmente zu vermeiden, sollte jedoch in beiden Fällen ein Benetzungsadditiv mit 3,5 - 4 Gew.% eingesetzt werden, bezogen auf die Füllstoffmischung. So erhält man auf diese Weise die gleiche Farbsättigung.

Man erhält Dispersionen, in welchen die Pigmente keine Entmischung zeigen. Überraschenderweise lässt sich auch die Pigmentmenge gegenüber den Zusatz als Farbpaste oder als trockener Fertigmischung deutlich reduzieren, so dass neben der Einsparung an Netzmitteln auch eine Pigmenteinsparung zu Buche schlägt.

### Vergleichsbeispiele 1 und 2

Die Vergleichsbeispiele 1 und 2 wurden jeweils analog Beispielen 1 und 2 durchgeführt, wobei die Pulver und das Quarzmehl nicht silanisiert wurden. Es ergaben sich jeweils höhere Viskositätswerte und Fließgrenzen für die Mischungen.

Bei dem Material in Vergleichsbeispiel 1 ergab sich eine Viskosität von 971 mPas und eine Fließgrenze 4,492 Pa, und bei dem Material aus Vergleichsbeispiel 2 eine Viskosität von 1148 mPas und eine Fließgrenze von 5,084 Pa.

### Vergleichsbeispiele 3 und 4

Üblicherweise werden einzelne Kornfraktionen silanisiert und zum Verkauf angeboten, z.B. eine durch Mischbeschichtung erhaltene Kornfraktion A und eine durch Mühlenbeschichtung erhaltene Fraktion B. Diese werden dann vom Verarbeiter vor Ort abgewogen und dosiert. Im Vergleich zu den Beispielen ergab sich bei einer entsprechenden Durchführung der Beispiele derart, dass jeweils das Quarzpulver und das Quarzmehl separat silanisiert wurden, ein erhöhter Aufwand beim Vermischen der beiden Fraktionen.

Überraschenderweise können über die Mischbeschichtung stabile Füllstoffmischungen hergestellt werden, wobei das Verfahren und das eingesetzte Silan dem verwendeten Rohstoff angepasst werden können.

Zudem ergab sich eine geringere Vergrauung des gemahlenen und beschichteten Produktes. Bei einer Mühlenbeschichtung, wie sie üblicherweise für die einzelnen Fraktionen durchgeführt wird, ist der Metallabrieb, die Verunreinigung, größer als bei der vorliegenden Mischbeschichtung, insbesondere wenn alle produktberührenden Teile des Mischers mit einer nicht verfärbenden Verschleißschicht versehen sind.

### Ausführungsbeispiel 1

Die erfindungsgemäße Zusammenstellung kann durch Abstimmen der beiden Quarzfraktionen ein Optimum an Fließfähigkeit und Packungsdichte erreichen, so dass Produkte mit überdurchschnittlichen Füllstoffgehalt (niederen Kosten) hoher Kratzfestigkeit, hoher Schlagzähigkeit, hoher Oberflächenglätte (geringe Rauigkeit und geringe Neigung zu Verschmutzen) erhalten werden können.

Um die Verarbeitbarkeit der erfindungsgemäßen Füllstoffmischungen zu untersuchen, wurden diese mit verschiedenen Anteilen an Bindemittel, einem Polyester der Firma SIR mit der Bezeichnung SIRESTER ISN 841 (Viskosität: 450 Pas), gemischt und die Viskosität und die Fließgrenze gemäß dem folgenden Verfahren bestimmt

Um dieses Optimum zu bestimmen, wird üblicherweise mit einem Brookfield Messgerät die Viskosität bei einer Geschwindigkeit gemessen. Hierbei werden die Verhältnisse jedoch nur unzureichend wiedergegeben. Bei der Zusammenstellung der erfindungsgemäßen Mischungen mit Bindemitteln in Form von Dispersionen wurde deshalb mit einem Viskosimeter der Firma Schleibinger unter Verwendung eines sogenannten Mörtelpaddels die Rührgeschwindigkeit gleichmäßig von 0 auf 80 Umdrehungen/min in 10 Minuten erhöht. Die Messordnung wurde so gewählt, dass während der Messung ein Entmischen der Dispersion vermieden wird. Es wurden Wertepaare aus Drehmoment und Geschwindigkeit ermittelt. Die Ableitung dieser Messkurve ergibt die relative Viskosität der Mischung. Aus dem Achsenabschnitt kann man die relative Fließgrenze entnehmen. Für die Auswahl der optimalen Mischung wurde sowohl die relative Viskosität als auch die relative Fließgrenze herangezogen.

Flüssigkeiten wurden mit einem Rotationsviskosimeter der Firma Schleibinger gemessen. Der Kegel wird von 0 Umdrehungen pro Minute in 10 Minuten auf 80 Umdrehungen beschleunigt. Die auf den Kegel wirkende Kraft wird in Abhängigkeit der Geschwindigkeit aufgezeichnet. Die Ableitung ergibt die dynamische Viskosität der Flüssigkeit, der Achsenabschnitt gibt die Fließgrenze wieder (entsprechend "Use of the ViscoCorder to study the rheology of fresh mortar", P. F. G. Banfill, Magazine of Concrete Research, 1990, 42, No. 153, Dec., 213-221).

Die Viskositätsmessung erfolgte hierbei wie folgt:
Die Viskositätsmessung wurde mit einem nach DIN ISO 3219 gefertigten Zylindermesssystem entsprechend der DIN ISO 3219 durchgeführt. Ein entsprechender Viskomat ist in "Formgebung und Verdichtung von Gemengen", Helmut Kuch, Jörg-Henry Schwabe, Ulrich Palzer, Verlag: Bau und Technik, Juni 2012, S 45 - 46 beschrieben.

Die EN ISO 3219 ist Grundlage der Messung und basiert auf der älteren DIN 53019. Es wurde ein Zylinder Messsystem V0070 (Zylindermesssystem f. Viskomat NT der Firma Schleibinger), bestehend aus Topf und Messkörper Durchmesser 50 mm mit kegelförmiger Spitze, Öffnungswinkel 120°, Couette Prinzip, verwendet. Zur Messung wurde die Standardgeometrie nach DIN 53019, für Messungen u.a. nach EN ISO 3219 mit folgenden Rahmenbedingungen verwendet:
delta = Ra/Ri = 1,0847, Spaltweite 2,12 mm, Probenvolumen 127,7 ml, Topfhöhe 150mm. Bei 100 Upm und 200 Nm Drehmoment ergab sich eine repräsentative Schubspannung: von 570,4 Pa; eine repräsentative Schergeschwindigkeit von 129,1 1/s, und eine repräsentative Viskosität von 4,42 Pa*s, gemessen mit Kalibrierflüssigkeiten der Firma Brookfield mit der Bezeichnung Viscosity Standard.

Gemäß den obigen Angaben wurden Mischungen mit gleichem Füllstoffgehalt hergestellt, wobei die Zusammensetzung des Füllstoffes hinsichtlich der Korngröße durch Änderung der Gewichtsanteile der jeweiligen Fraktionen geändert wurde. Es wurde hierbei die Zusammensetzung gravimetrisch dosiert.

Aus der entsprechenden Auswertung erhält man die Viskosität und die Fließgrenze. Die Fließgrenze ist ein Maß für das Fließverhalten der Masse. Hohe Werte zeichnen ein schlechtes Fließverhalten aus, und in der Mischung muss eine hohe Kraft aufgebracht werden um diese in Bewegung zu setzen. Niedrige Werte stellen einen geringen Widerstand des Gemischs beim Bewegen, z.B. Rühren, dar.

In Tabelle 5 wurde das Pulver aus Beispiel 1 mit einem Füllstoffgrad von 72 Gew.%, bezogen auf die Mischung, hinsichtlich der Viskosität und der Fließgrenze untersucht.

**Tabelle 5: Ergebnisse für Ausführungsbeispiel 1 (Viskosität Bindemittel: 450 Pas)**

| Gew.% des Quarzmehls (Fraktion 2) in der Füllstoffmischung | Viskosität in mPas | Fließgrenze |
|---|---|---|
| 0 | 1690 | 6,13 |
| 5 | 1678 | 5,9 |
| 10 | 1301 | 5,89 |
| 15 | 1101 | 4,744 |
| 17,5 | 1024 | 4,545 |
| 20 | 1032 | 4,289 |
| 25 | 942 | 3,84 |
| 30 | 897 | 3,73 |
| 35 | 904 | 3,768 |

Wie aus der Tabelle ersichtlich nimmt die Viskosität mit zunehmendem Quarzmehlanteil ab. Sie erreicht ein Minimum zwischen 25 und 35 Gew.% Anteil an feinem Quarzmehl. In gleicher Weise verändert sich die Fließfähigkeit des Materials.

Durch Erreichen der geringeren Viskosität bietet sich nun an, mit der optimierten Mischung den Füllstoffgrad zu erhöhen. Hierdurch erreicht man eine zusätzliche Kostenreduzierung ohne dass hierdurch die Materialeigenschaften der gefertigten Produkte sich merklich verändern. Merkmal ist immer eine ausreichende Verarbeitbarkeit des Materials.

Entsprechende Werte für Ausführungsbeispiel 1 können Tabelle 6 entnommen werden.

**Tabelle 6: Daten für erhöhten Füllstoffgehalt (Viskosität Bindemittel: 450 Pas)**

| Füllstoffgehalt (Gew.%) | Viskosität (mPas) |
|---|---|
| 72 | 794 |
| 73 | 979 |
| 74 | 1046 |
| 75 | 1367 |

Wie aus der Tabelle ersichtlich kann man den Füllstoffgrad erhöhen und bleibt bei der Verarbeitungsviskosität im Verarbeitungsbereich, der üblicherweise im Bereich zwischen 1000 und 1400 mPas liegt. Für andere Anwendung ist auch noch ein höherer Füllstoffanteil möglich.

### Ausführungsbeispiel 2

Ausführungsbeispiel 2 wurde analog Ausführungsbeispiel 1 mit den Füllstoffmischungen aus Beispiel 2 durchgeführt.

Im Vergleich zu Ausführungsbeispiel 1 wurden mit den Füllstoffmischungen gemäß Beispiel 2 bei einem Füllstoffanteil von 72 Gew.%, bezogen auf die Mischung, folgende Ergebnisse in Tabelle 7 erhalten.

**Tabelle 7: Ergebnisse für Ausführungsbeispiel 2 (Viskosität Bindemittel: 450 Pas)**

| Gew.% des Quarzmehls (Fraktion 2) in der Füllstoffmischung | Viskosität in mPas | Fließgrenze |
|---|---|---|
| 0 | 1731 | 4,54 |
| 5 | 1398 | 5,16 |
| 7,5 | 1357 | 6,4 |
| 10 | 1487 | 8,76 |
| 15 | 958 | 3,96 |
| 17,5 | 895 | 3,41 |
| 20 | 958 | 4,24 |

Wie aus Tabelle 7 ersichtlich erhält man schon mit wesentlich weniger Mehlanteil das Viskositätsminimum.

Deutlicher wird das Verhalten hier durch die Fließgrenze definiert. Es tritt mit geringen Mehlanteilen zuerst eine Viskositätserhöhung auf, die dann bei weiterer Zugabe von Mehl schnell das Optimum erreicht.

Wie aus den gezeigten Daten in Ausführungsbeispielen 1 und 2 ersichtlich kann man mit der gleichen Messmethode experimentell auch die ideale Silanmenge, die auf der Oberfläche benötigt wird, bestimmen. Die erfindungsgemäßen Füllstoffmischungen stellen hinsichtlich der Packungsdichte, Fließfähigkeit, und Stabilität gegenüber Entmischung und Sedimentationen sowohl in der Mischung selbst als auch in Mischungen mit flüssigen Bindemitteln ein Optimum dar. Durch die Silanisierung wird auch die Fließfähigkeit der Füllstoffmischung verbessert und Brückenbildungen des Feststoffes reduziert, so dass das Material leichter verarbeitet und dosiert werden kann.

Das erfindungsgemäße Verfahren stellt ein einfaches Verfahren zur Herstellung von stabilen und optimieren Füllstoffmischungen bereit, mit denen auf einfache Weise z.B. Formteile unter Zusatz von Bindemitteln hergestellt werden können. Im Stand der Technik hingegen werden üblicherweise die verschiedenen Körnungen zur Herstellung des Füllstoffs nachträglich gemischt, was mit zusätzlichem Aufwand verbunden ist.

Auch können beim erfindungsgemäßen Verfahren Pigmente direkt im Verfahren eingemischt werden, wodurch bereits Füllstoff-Pigment-Mischungen ohne großen Aufwand hergestellt werden können, wohingegen gemäß dem Stand der Technik nachträglich Pigmente in den Füllstoff eingemischt werden, was mit Nachteilen bei der Vermischung sowie zusätzlichem Aufwand verbunden ist.

## Patentansprüche

1. Verfahren zur Herstellung einer Füllstoffmischung, umfassend
i) Bereitstellen einer ersten Fraktion von Füllstoffen mit einer Partikelgröße von 0,1 bis 0,8 mm;
ii) Silanisieren der ersten Fraktion von Füllstoffen durch Zugeben eines ersten Silanisierungsmittels und Vermischen der erhaltenen Mischung;
iii) Zugeben einer zweite Fraktion von Füllstoffen mit einer Partikelgröße von mehr als 0 bis 0,08 mm zur ersten Fraktion und Vermischen der erhaltenen Mischung; und
iv) Silanisieren der zweiten Fraktion von Füllstoffen durch Zugeben eines zweiten Silanisierungsmittels und Vermischen der erhaltenen Mischung.

2. Verfahren nach Anspruch 1, wobei der Anteil der ersten Fraktion von Füllstoffen in der Füllstoffmischung nach dem Silanisieren 50 bis 95 Gew.% beträgt, bezogen auf 100 Gew.% der Füllstoffmischung.

3. Verfahren nach Anspruch 1 oder 2, wobei die Partikel der ersten Fraktion von Füllstoffen eine runde oder kantengerundete Form haben.

4. Verfahren nach einem der vorigen Ansprüche, wobei die Partikel der ersten Fraktion von Füllstoffen eine Mohshärte von größer als 6 haben.

5. Verfahren nach einem der vorigen Ansprüche, wobei mindestens 95 Gew.% der Partikel der ersten Fraktion von Füllstoffen, bezogen auf die erste Fraktion von Füllstoffen, eine Partikelgröße von weniger als 0,5 mm aufweisen.

6. Verfahren nach einem der vorigen Ansprüche, wobei die Partikel der zweiten Fraktion von Füllstoffen eine Dichte von 2,0 - 3,0 g/cm³ aufweisen.

7. Verfahren nach einem der vorigen Ansprüche, weiter umfassend:
v-a) Zugeben einer Fraktion von Pigmenten; und
vi-a) Silanisieren der Fraktion von Pigmenten durch Zugeben eines dritten Silanisierungsmittels; oder
v-b) Zugeben einer Fraktion von silanisierten Pigmenten.

8. Füllstoffmischung, umfassend
eine ersten Fraktion von silanisierten Füllstoffen mit einer Partikelgröße von 0,1 bis 0,8 mm; und
eine zweite Fraktion von silanisierten Füllstoffen mit einer Partikelgröße von mehr als 0 bis 0,08 mm,
hergestellt nach einem Verfahren gemäß einem der vorigen Ansprüche.

9. Füllstoffmischung nach Anspruch 8, wobei der Anteil der ersten Fraktion von Füllstoffen in der Füllstoffmischung nach dem Silanisieren 50 bis 95 Gew.% beträgt, bezogen auf 100 Gew.% der Füllstoffmischung.

10. Füllstoffmischung nach Anspruch 8 oder 9, wobei die Partikel der ersten Fraktion von Füllstoffen eine runde oder kantengerundete Form haben.

11. Füllstoffmischung nach einem der Ansprüche 8 bis 10, wobei die Partikel der ersten Fraktion von Füllstoffen eine Mohshärte von größer als 6 haben.

12. Füllstoffmischung nach einem der Ansprüche 8 bis 11, wobei mindestens 95 Gew.% der Partikel der ersten Fraktion von Füllstoffen, bezogen auf die erste Fraktion von Füllstoffen, eine Partikelgröße von weniger als 0,5 mm aufweisen.

13. Füllstoffmischung nach einem der Ansprüche 8 bis 12, wobei die Partikel der zweiten Fraktion von Füllstoffen eine Dichte von 2,0 - 3,0 g/cm³ aufweisen.

14. Füllstoffmischung nach einem der Ansprüche 8 bis 13, weiter umfassend eine Fraktion von silanisierten Pigmenten.

## Claims

1. Method of producing a filler mixture, comprising
i) preparation of a first fraction of fillers with a particle size of 0.1 to 0.8 mm;
ii) silanization of the first fraction of fillers by adding a first silanization means and mixing the mixture obtained;
iii) addition of a second fraction of fillers with a particle size of more than 0 to 0.08 mm to the first fraction and mixing the mixture obtained; and
iv) silanization of the second fraction of fillers by adding a second silanization means and mixing the mixture obtained.

2. Method according to claim 1, wherein the proportion of the first fraction of fillers in the filler mixture after silanization is 50 to 95 percent by weight, in relation to 100 percent by weight of the filler mixture.

3. Method according to claim 1 or claim 2, wherein the particles of the first fraction of fillers have a round or round-edged shape.

4. Method according to any one of the preceding claims, wherein the particles of the first fraction of fillers have a Mohs hardness greater than 6.

5. Method according to any one of the preceding claims, wherein at least 95 percent by weight of the particles of the first fraction of fillers, in relation to the first fraction of fillers, exhibit a particle size of less than 0.5 mm.

6. Method according to any one of the preceding claims, wherein the particles of the second fraction of fillers exhibit a density of 2.0 - 3.0 g/cm³.

7. Method according to any one of the preceding claims, further comprising:
v-a) addition of a fraction of pigments; and
vi-a) silanization of the fraction of pigments by adding a third silanization means; or
v-b) addition of a fraction of silanized pigments.

8. Filler mixture, comprising
a first fraction of silanized fillers with a particle size of 0.1 to 0.8 mm, and
a second fraction of silanized fillers with a particle size of more than 0 to 0.08 mm,
produced according to a method according to any one of the preceding claims.

9. Filler mixture according to claim 8, wherein the proportion of the first fraction of fillers in the filler mixture amounts to 50 to 95 percent by weight after silanization, in relation to 100 percent by weight of the filler mixture.

10. Filler mixture according to claim 8 or claim 9, wherein the particles of the first fraction of fillers have a round or round-edged shape.

11. Filler mixture according to any one of claims 8 to 10, wherein the particles of the first fraction of fillers have a Mohs hardness greater than 6.

12. Filler mixture according to any one of claims 8 to 11, wherein at least 95 percent by weight of the particles of the first fraction of fillers, in relation to the first fraction of fillers, exhibit a particle size of less than 0.5 mm.

13. Filler mixture according to any one of claims 8 to 12, wherein the particles of the second fraction of fillers exhibit a density of 2.0 - 3.0 g/cm³.

14. Filler mixture according to any one of claims 8 to 13, further comprising a fraction of silanized pigments.

## Revendications

1. Procédé de fabrication d'un mélange de matières de charge, comprenant de :
i) préparer une première fraction de matières de charge avec une taille de particules de 0,1 à 0,8 mm ;
ii) silaniser la première fraction de matières de charge en ajoutant un premier moyen de silanisation et mélanger le mélange obtenu ;
iii) ajouter une seconde fraction de matières de charge avec une taille de particules de plus de 0 à 0,08 mm à la première fraction et mélanger le mélange obtenu ; et
iv) silaniser la seconde fraction de matières de charge en ajoutant un deuxième moyen de silanisation et mélanger le mélange obtenu.

2. Procédé selon la revendication 1, dans lequel la part de la première fraction de matières de charge dans le mélange de matières de charge après la silanisation représente 50 à 95% en poids, par rapport à 100% en poids du mélange de matières de charge.

3. Procédé selon la revendication 1 ou 2, dans lequel les particules de la première fraction de matières de charge ont une forme ronde ou à bords arrondis.

4. Procédé selon une des revendications précédentes, dans lequel les particules de la première fraction de matières de charge ont une dureté Mohs supérieure à 6.

5. Procédé selon une des revendications précédentes, dans lequel au moins 95 % en poids des particules de la première fraction de matières de charge, par rapport à la première fraction de matières de charge, présentent une taille de particules inférieure à 0,5 mm.

6. Procédé selon une des revendications précédentes, dans lequel les particules de la seconde fraction de matières de charge présentent une densité de 2,0 à 3,0 g/cm³.

7. Procédé selon une des revendications précédentes, consistant en outre à :
v-a) ajouter une fraction de pigments ; et
vi-a) silaniser la fraction de pigments en ajoutant un troisième moyen de silanisation ; ou
v-b) ajouter une fraction de pigments silanisés.

8. Mélange de matières de charge, comprenant :
une première fraction de matières de charge silanisées avec une taille de particules de 0,1 à 0,8 mm, et
une seconde fraction de matières de charge silanisées avec une taille de particules de plus de 0 à 0,08 mm, fabriquées selon un procédé selon une des revendications précédentes.

9. Mélange de matières de charge selon la revendication 8, dans lequel la part de la première fraction de matières de charge dans le mélange de matières de charge après la silanisation représente 50 à 95% en poids, par rapport à 100 % en poids du mélange de matières de charge.

10. Mélange de matières de charge selon la revendication 8 ou 9, dans lequel les particules de la première fraction de matières de charge ont une forme ronde ou à bords arrondis.

11. Mélange de matières de charge selon une des revendications 8 à 10, dans lequel les particules de la première fraction de matières de charge ont une dureté Mohs supérieure à 6.

12. Mélange de matières de charge selon une des revendications 8 à 11, dans lequel au moins 95 % en poids des particules de la première fraction de matières de charge, par rapport à la première fraction de matières de charge, présentent une taille de particules inférieure à 0,5 mm.

13. Mélange de matières de charge selon une des revendications 8 à 12, dans lequel les particules de la seconde fraction de matières de charge présentent une densité de 2,0 à 3,0 g/cm³.

14. Mélange de matières de charge selon une des revendications 8 à 13, comprenant en outre une fraction de pigments silanisés.
